# EUROPÄISCHE PATENTSCHRIFT

(11) **EP 4 000 174 B1**
(45) Veröffentlichungstag und Bekanntmachung des Hinweises auf die Patenterteilung: **18.12.2024**
(21) Anmeldenummer: 20743110.7
(22) Anmeldetag: 16.07.2020
(51) Int. Cl.: H02P 27/08, F04B 17/03, B21D 24/14, H02P 25/00, H02P 23/16, F04B 49/06

(54) **VORRICHTUNG UND VERFAHREN ZUR STEUERUNG ODER REGELUNG EINER BEWEGUNG EINES ZIEHKISSENS EINER ZIEHKISSENPRESSE**
DEVICE AND METHOD FOR OPEN-LOOP OR CLOSED-LOOP CONTROL OF A MOVEMENT OF A DIE CUSHION OF A DIE CUSHION PRESS
DISPOSITIF ET PROCÉDÉ DE COMMANDE OU DE RÉGLAGE D'UN DÉPLACEMENT D'UN COUSSIN DE SERRE-FLAN D'UNE PRESSE DE COUSSIN DE SERRE-FLAN

(30) Priorität: 17.07.2019 DE 102019119392
(43) Veröffentlichungstag der Anmeldung: 25.05.2022
(73) Patentinhaber: MOOG GmbH, 71034 Böblingen (DE)
(72) Erfinder: HÄNDLE, Werner, 71672 Marbach am Neckar (DE); HELBIG, Achim, 70184 Stuttgart (DE)
(74) Vertreter: Wittmann, Ernst-Ulrich
(86) Internationale Anmeldenummer: PCT/EP2020/070146
(87) Internationale Veröffentlichungsnummer: WO 2021/009285

(56) Entgegenhaltungen:
- EP-A1- 3 173 163
- WO-A1-2019/025478
- US-A1- 2005 262 915
- US-A1- 2011 045 113

## Beschreibung

Die vorliegende Erfindung betrifft eine Vorrichtung zur Steuerung oder Regelung einer Bewegung eines Ziehkissens einer Ziehkissenpresse und ein Verfahren zur Steuerung oder Regelung einer Bewegung eines Ziehkissens einer Ziehkissenpresse

### Stand der Technik

Ziehkissenpressen sind im Stand der Technik bekannt. Beispielsweise beschreibt die EP 1 882 534 eine Ziehkissenpresse auf Basis eines Pumpendirektantriebs, mit dem es möglich sei, Prozessenergie zurückzugewinnen.

Kennzeichnend für die Ziehkissenpresse auf Basis eines Pumpendirektantriebs ist, dass die Steuervorrichtung ein Drehmoment des Elektromotors des Pumpendirektantriebs auf der Grundlage des Ziehkissendruckbefehls und des detektierten Drucks so steuert, dass der Ziehkissendruck einen Druck darstellt, der mit dem Ziehkissendruckbefehl übereinstimmt. Diesbezüglich umfasst die in der EP 1 882 534 dargestellte Ziehkissenpresse eine Druckregelung, welche als Stellwert für den Elektromotor ein Motormoment ausgibt.

Neben dem Lastdruck an der Pumpe, welcher direktproportional zum Motormoment ist, benötigt der Drehmomenten Sollwert an dem Elektromotor aber auch Stellwertanteile für die Beschleunigung und Abbremsung im Pumpendirektantrieb befindlicher Trägheit. Darüber hinaus werden Stellwertanteile im Motormoment benötigt, die beispielsweise Reibungs- und Motorverluste kompensieren müssen. Weder Beschleunigungs- noch Verlustanteile werden mit der beschriebenen Steuerung dem Elektromotor kommandiert. In der Konsequenz unterliegt das zu kommandierende Motormoment bzw. der Motorstrom sehr starken Änderungen in Abhängigkeit der auftretenden Motor-, Pumpen- und Zylinderverluste. Dies führt jedoch in nachteilhafter Weise dazu, dass die Qualität und die Dynamik der im Stand der Technik bekannten Ansteuerung des Elektromotors nicht die Anforderung an heutige Umformprozesse bei denen Ziehkissen zum Einsatz kommen erfüllen.

Vor diesem Hintergrund ist es eine Aufgabe der vorliegenden Erfindung, die Nachteile des Standes der Technik wenigstens teilweise zu überwinden, bzw. den Stand der Technik zu verbessern.

US 2005/262915 A1 betrifft eine Matrizendämpfungsvorrichtung, die zum Anheben oder Absenken eines Dämpfungskissens unter Aufbringung einer nach oben gerichteten Erregungskraft angetrieben wird, und insbesondere eine Matrizendämpfungsvorrichtung, die einen in einer Pressenmaschine erzeugten Stoß abmildert.

US 2011/045113 A1 betrifft eine Ziehkissenvorrichtung bei der eine Stoßdämpfervorrichtung den stoß zwischen einem Kissen und einem Stützabschnitt entlastet. Die Stoßdämpfungsvorrichtung umfasst einen Dämpfungsabschnitt und einen elastischen Abschnitt. Der Dämpfungsabschnitt erzeugt eine Reaktionskraft in Übereinstimmung mit der relativen Geschwindigkeit des Dämpfungspolsters in Bezug auf den Stützabschnitt. Der elastische Abschnitt erzeugt eine Reaktionskraft entsprechend der relativen Verschiebung des Dämpfungspolsters in Bezug auf den Stützabschnitt. Der Reglerabschnitt steuert einen Servomotor so, dass eine Geschwindigkeitsdifferenz zwischen der Geschwindigkeit des Gleitelements und der Geschwindigkeit des Stützabschnitts auf einen vorbestimmten Soll-Geschwindigkeitsdifferenzwert eingestellt wird, der sich mit der Zeit ändert.

WO 2019/025478 A1 betrifft ein Verfahren zur Regelung des Ausgangsdrucks eines hydraulischen Antriebssystems unter Verwendung einer Drehzahl als Stellgröße, wobei das hydraulische Antriebssystem eine Hydraulikpumpe und einen die Hydraulikpumpe antreibenden Motorantrieb aufweist.

Diese Aufgabe wird erfindungsgemäß gemäß einem ersten Aspekt der vorliegenden Erfindung durch eine Vorrichtung mit den in Patentanspruch 1 angegebenen Merkmalen gelöst.

Die Erfindung schafft demnach eine Vorrichtung zum Steuern oder Regeln einer Bewegung eines Ziehkissens einer Ziehkissenpressemit den Merkmalen des Patentanspruchs 1.

Der Nennstrom umfasst die für den Betrieb des elektrischen Antriebs auf Basis des Soll-Stroms bereitgestellte elektrische Stromstärke.

In vorteilhafter Weise ist erkannt worden, dass eine Verbesserung des Regelverhaltens erreicht werden kann, wenn die Vorgabegröße an einen Motor bzw. der Stellwert aus einem Positions-, Geschwindigkeits- oder Kraftregler eine Kraft- oder Druckanstiegsproportionale Größe ist. Wird diesbezüglich eine Motordrehzahl zum Antrieb der Motorpumpeneinheit bereitgestellt, wird eine entscheidende Verbesserung der dynamischen Regelgüte erreicht. Die dynamische Regelgüte ist dabei eine Voraussetzung, um die beim Ziehvorgang gewünschten Druck- bzw. Kraftverläufe nachfahren zu können. Die Beschleunigungs- und Verlustanteile im elektrischen Antrieb werden selbstständig ausgeregelt und müssen nicht weiter berücksichtigt werden.

Vorteilhafterweise erlaubt die Vorgabe einer Motordrehzahl eine sehr einfache Regler Umschaltung zwischen Positions- und Kraftregelung des Ziehzylinders. Da in den beiden Reglermodi das Ausgangssignal des Reglers die Motordrehzahl ist, kann der Übergang entsprechend sanft und Ruck frei erfolgen. Diese Funktionalität wird bei einem Ziehkissen während des Übergangs von der Vorbeschleunigungsphase (Positionsgeregelt) auf den Ziehvorgang (Kraftgeregelt) benötigt. Das zuvor gesagte gilt auch für den Übergang vom Ziehvorgang (Kraftgeregelt) auf Rückfahrbewegung (Positionsgeregelt).

Während des Ziehvorgangs (Kraftgeregelt) stellt die Geschwindigkeit des Ziehkissen die Störgröße für die Kraftregelung dar. Diese Geschwindigkeit wird am Ziehkissen gemessen oder wird durch die Geschwindigkeit des Stößels in dieser Phase vorgegeben und ist somit bekannt. Ist das Ausgangssignal der Kraftregelung eine Drehzahl, kann die bekannte Größe Ziehkissengeschwindigkeit als Störgröße in vorteilhafter Weise dem Regelkreis aufgeschaltet werden und sorgt damit für eine weitere Verbesserung der Kraftregelung.

Weitere vorteilhafte Ausgestaltungen der Erfindung sind Gegenstand der Unteransprüche sowie der im Folgenden beschriebenen Ausführungsbeispiele.

In einer vorteilhaften Ausführungsform der Vorrichtung gemäß dem ersten Aspekt der vorliegenden Erfindung ist eine Berechnung der Soll-Drehzahl basierend auf einer Ziehstempelinformation, die von einem Ziehstempeldetektor erfasst wird, vorgesehen.

Die Ziehstempelinformation umfasst beispielsweise den Druck in der Zylinderkammer oder die Position des Ziehkissens. Der Ziehstempeldetektor ist beispielsweise ein Drucksensor zum Erfassen des Drucks in einer ersten und einer zweiten Kammer des Hydraulikzylinders. Durch den Ziehstempeldetektor wird der Druck gemessen. Eine adäquate Kraft, insbesondere die Ist-Kraft, wird über den gemessenen Druck und die Fläche der entsprechenden Kammer des Hydraulikzylinders bestimmt. In vorteilhafter Weise können, die bereits in dem System verbauten und günstigen Drucksensoren verwendet werden.

In einer alternativen Ausführungsform kann der Ziehstempeldetektor als eine Kraftmesszelle ausgebildet sein, die an der Kolbenstange des Hydraulikzylinders zwischen der Kolbenstange und dem Werkstück eingebracht ist.

In einer alternativen Ausführungsform umfasst der Ziehstempeldetektor Beschleunigungssensoren.

In einer vorteilhaften Ausführungsform der Vorrichtung gemäß dem ersten Aspekt der vorliegenden Erfindung umfasst der Stellwertgeber einen Positionsregler, einen Geschwindigkeitsregler oder einen Kraftregler.

In vorteilhafterweise können in Abhängigkeit des Ziehprozesses während des Ziehvorgangs Kraftregler zur Bestimmung einer Soll-Drehzahl verwendet werden. Während der Bewegung bzw. des Fahrens des Werkzeugs und des Zylinders in Richtung Werkstück und in die entgegengesetzte Richtung können beispielsweise Positionsregler und Geschwindigkeitsregler zur Bestimmung einer Soll-Drehzahl verwendet werden.

In einer weiteren vorteilhaften Ausführungsform der Vorrichtung gemäß dem ersten Aspekt der vorliegenden Erfindung umfasst die Vorrichtung einen Stromdetektor zum Erfassen des Nennstroms des elektrischen Antriebs. Der Stromregler verwendet einen Soll-Strom, der eine Differenz aus dem Soll-Strom und der durch den Stromdetektor erfassten Rückkopplung des Nennstroms des elektrischen Antriebs ist.

Der elektrische Antrieb umfasst drei Phasen und aus den elektrischen Strömen der drei Phasen ergibt sich das Motordrehmoment. Mittels des Stromdetektors werden die elektrischen Ströme in den drei Phasen des elektrischen Antriebs gemessen. In einer alternativen Ausführungsform brauchen nur die elektrischen Ströme in zwei Phasen des elektrischen Antriebs gemessen und der Strom der dritten Phase kann ermittelt werden.

Dies hat den Vorteil, dass zum Ermitteln des Stroms bereits am elektrischen Antrieb bestehende Stromdetektoren zum Ermitteln des Stroms verwendet werden können. Eine Rückkopplung des Ist-Strom des elektrischen Antriebs hilft die eigentliche Drehzahl abzuleiten und somit die Regelung bzw. das zu regelnde System dynamischer auszugestalten. Zudem wird die Regelbandbreite im System erhöht.

In einer weiteren vorteilhaften Ausführungsform der Vorrichtung gemäß dem ersten Aspekt der vorliegenden Erfindung umfasst die Vorrichtung einen Drehzahlgeber zum Erfassen einer Momentandrehzahl des elektrischen Antriebs. Der Drehzahlregler verwendet eine Soll-Drehzahl, die eine Differenz aus der Soll-Drehzahl und der durch den Drehzahlgeber erfassten Rückkopplung der Momentandrehzahl des elektrischen Antriebs ist.

Dies hat den Vorteil, dass bereits bestehende Sensoren am elektrischen Antrieb verwendet werden können, die Informationen die Ist-Drehzahl des Motors.

In der Vorrichtung gemäß dem ersten Aspekt der vorliegenden Erfindung verwendet der Drehzahlregler eine Soll-Drehzahl, die eine Störgröße umfasst.

Dies hat den Vorteil, dass beispielsweise während des Ziehprozesses im Kraftgang die Geschwindigkeit als Störgröße aufgeschaltet werden kann. Somit wird die Qualität der Kraftregelung verbessert. In vorteilhafter Weise kann während der Bewegung des Hydraulikzylinders, beispielsweise in Richtung des Werkstücks, in der zusätzlich zur Bewegung die Kraft durch den Kraftregler geregelt wird, der Motorpumpeneinheit eine Drehzahl bereitgestellt werden, so dass diese der Drehzahl des Werkzeugs entspricht. Somit können mit bereits vorher bereitgestellten Informationen über die Geschwindigkeit, Überschwinger im System, beispielsweise Druckmaxima oder Druckminima der Motorpumpeneinheit vermieden werden und das System agiert dynamischer und der Stellwertgeber wird entlastet.

In einer weiteren vorteilhaften Ausführungsform der Vorrichtung gemäß dem ersten Aspekt der vorliegenden Erfindung ist die Soll-Drehzahl des Stellwertgebers proportional zum Kraft- oder Druckanstieg innerhalb der Ziehkissenpresse.

Dies hat den Vorteil, dass unabhängig von auftretenden Störgrößen an der Ziehkissenpresse, deren Wert nicht bekannt sind, beispielsweise Reibung im Zylinder, Reibung in der Motorpumpeneinheit, Verluste im elektrischen Antrieb, eine Drehzahl über einen Drehzahlregler vorgeben wird und diesbezüglich Störgrößen und somit Verluste ausregelt werden. Beispielsweise können Stick-Slip-Verhalten der Motorpumpeneinheit über die vorgegebene Drehzahl reduziert werden. Der Drehzahlregler stellt für die vorgegebene Drehzahl einen Strom bereit, woraus das Drehmoment für den Motor generiert wird.

Die obigen Ausgestaltungen und Weiterbildungen lassen sich, sofern sinnvoll, beliebig miteinander kombinieren.

Die Erfindung schafft ferner gemäß einem zweiten Aspekt der vorliegenden Erfindung ein Verfahren zur Steuerung oder Regelung einer Bewegung eines Ziehkissens einer Ziehkissenpresse mit den in Anspruch 8 angegebenen Merkmalen.

Die Erfindung schafft demnach ein Verfahren zur Steuerung oder Regelung einer Bewegung eines Ziehkissens einer Ziehkissenpresse mit den Merkmalen des Patentanspruchs 7.

In einer vorteilhaften Ausführungsform des Verfahrens gemäß dem zweiten Aspekt der vorliegenden Erfindung wird die Soll-Drehzahl auf Basis einer Ziehstempelinformation berechnet. Die Ziehstempelinformation wird von einem Ziehstempeldetektor erfasst.

In einer weiteren vorteilhaften Ausführungsform des Verfahrens gemäß dem zweiten Aspekt der vorliegenden Erfindung verwendet der Stromregler einen Soll-Strom. Der Soll-Strom ist eine Differenz aus dem Soll-Strom und der durch einen Stromdetektor erfassten Rückkopplung des Nennstroms des elektrischen Antriebs.

In einer weiteren vorteilhaften Ausführungsform des Verfahrens gemäß dem zweiten Aspekt der vorliegenden Erfindung wird die Soll-Drehzahl auf Basis einer Ziehstempelinformation berechnet. Die Ziehstempelinformation wird von einem Ziehstempeldetektor erfasst.

In einer weiteren vorteilhaften Ausführungsform des Verfahrens gemäß dem zweiten Aspekt der vorliegenden Erfindung verwendet der Stromregler einen Soll-Strom, der eine Differenz aus dem Soll-Strom und der durch einen Stromdetektor erfassten Rückkopplung des Nennstroms des elektrischen Antriebs ist.

In einer weiteren vorteilhaften Ausführungsform des Verfahrens gemäß dem zweiten Aspekt der vorliegenden Erfindung verwendet der Drehzahlregler eine Soll-Drehzahl. Die Soll-Drehzahl ist eine Differenz aus der Soll-Drehzahl und der durch einen Drehzahlgeber erfassten Rückkopplung der Momentandrehzahl des elektrischen Antriebs.

Es ist vorgesehen, dass in dem Verfahren gemäß dem zweiten Aspekt der vorliegenden Erfindung der Drehzahlregler eine Soll-Drehzahl verwendet, die eine Störgröße umfasst.

Die Erfindung schafft ferner gemäß einem dritten Aspekt der vorliegenden Erfindung eine Ziehkissenpresse enthaltend eine Vorrichtung gemäß der Ansprüche 1 bis 7.

Die vorliegende Erfindung wird nachfolgend anhand der in den schematischen Figuren der Zeichnungen angegebenen Ausführungsbeispiele näher erläutert.

Es zeigen dabei:
- Fig. 1: ein schematisches Blockschaltbild zur Darstellung eines Ausführungsbeispiels einer erfindungsgemäßen Vorrichtung zur Steuerung oder Regelung einer Bewegung eines Ziehkissens einer Ziehkissenpresse;
- Fig. 2: ein schematisches Ablaufdiagramm zur Darstellung eines möglichen Ausführungsbeispiels eines erfindungsgemäßen Verfahrens zur Steuerung oder Regelung einer Bewegung eines Ziehkissens einer Ziehkissenpresse;
- Fig. 3a-3d: ein Diagramm zur Erläuterung der Kraftreglung bei einem Tiefziehgang inklusive Störgrößenaufschaltung bei einer möglichen Ausführungsform einer erfindungsgemäßen Vorrichtung zur Steuerung oder Regelung einer Bewegung eines Ziehkissens einer Ziehkissenpresse.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist-jeweils mit denselben Bezugszeichen versehen.

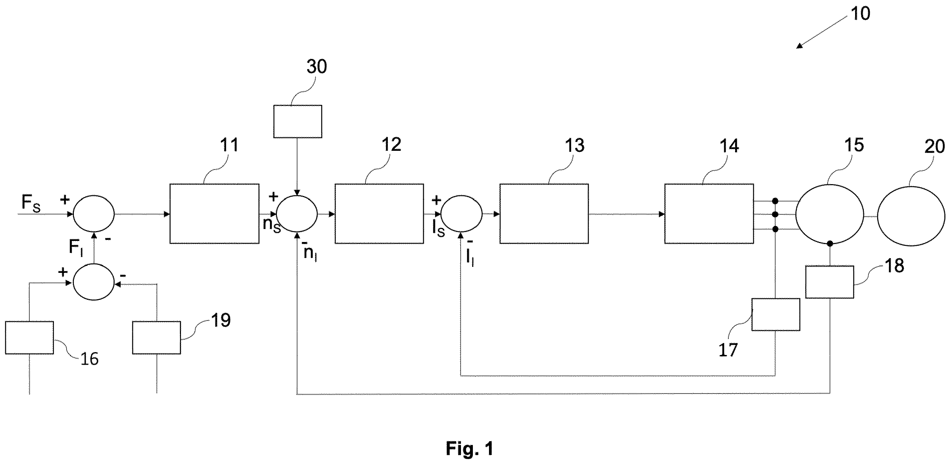

Fig. 1 zeigt ein Blockschaltbild zur Darstellung eines Ausführungsbeispiels einer erfindungsgemäßen Vorrichtung zur Steuerung oder Regelung einer Bewegung eines Ziehkissens einer Ziehkissenpresse.

In Fig. 1 ist die Vorrichtung 10 umfassend einen Regelkreis zur Regelung einer Ziehkissenpresse mit einer Kaskadenschaltung eines Stellwertgebers 11, eines Drehzahlreglers 12, eines Stromreglers 13 und einer Motorsteuereinrichtung 14 dargestellt. Der Stellwertgeber 11 kann als ein Positionsregler, Geschwindigkeitsregler oder als ein Kraftregler ausgebildet sein.

In einer vorteilhaften Ausführungsform empfängt der Stellwertgeber 11, beispielsweise ein Kraftregler, in dem Kraftgang bzw. dem eigentlichen Ziehprozess der Ziehkissenpresse als Stellgröße eine Differenz aus einer Ziehkisseninformation, beispielsweise der Soll-Kraft F_{S} und einer Ist-Kraft F_{I}. Die Soll-Kraft F_{S} ist die Führungsgröße (Sollwert). Die Ist-Kraft F_{I} umfasst eine Ziehstempelinformation und ergibt sich aus der Differenz der Kräfte, die dem Druck in den beiden Kammern des Hydraulikzylinders entspricht. Die Kraft ergibt sich über den gemessenen Druck und die Fläche der entsprechenden Kammer des Hydraulikzylinders. Die Ist-Kraft F_{I} ergibt sich aus der Differenz, da beide Kammern des Hydraulikzylinders eine gegenseitige Wirkung zueinander aufweisen. Der Druck in der jeweiligen Kammer wird über einen Ziehstempeldetektor 16 und 19 ermittelt.

Der Ziehstempeldetektor 16, 19 ist beispielsweise ein Drucksensor. Als Drucksensor können beispielsweise die in dem Hydraulikzylinder vorgesehenen Drucksensoren verwendet werden.

In einer alternativen Ausführungsform ist der Ziehstempeldetektor 16, 19 als eine Kraftmesszelle ausgebildet.

In einer weiteren alternativen Ausführungsform ist der Ziehstempeldetektor 16,19 als ein Positionssensor, beispielsweise ein Beschleunigungssensor, ausgebildet.

Die dem Stellwertgeber 11 bereitgestellte Stellgröße ergibt sich aus der Differenz der Soll-Kraft F_{S} und der Ist-Kraft F_{I}. Der Stellwertgeber 11 stellt eine Soll-Drehzahl n_{S} an den Drehzahlregler 12 bereit. Die an den Drehzahlregler 12 bereitgestellte Führungsgröße ist eine Differenz aus der durch den Stellwertgeber 11 bereitgestellten Soll-Drehzahl n_{S}, der Momentandrehzahl (Ist-Drehzahl) n_{I} und der Störgröße 30. Als Ergebnis stellt der Drehzahlregler 12 einen Soll-Strom I_{S} an den Stromregler 13 bereit.

Die an den Stromregler 13 bereitgestellte Führungsgröße ist eine Differenz aus dem durch den Drehzahlregler 12 bereitgestellten Soll-Strom I_{S} und dem Ist-Strom I_{S}. Der Stromregler 13 stellt auf Basis der durch den Drehzahlregler 12 bereitgestellten Führungsgröße ein Steuersignal zum Ansteuern der Motorsteuereinrichtung 14 bereit.

Das Steuersignal kann beispielsweise eine pulsweitenmodulierte Spannung umfassen. Die Motorsteuereinrichtung 14, beispielsweise ein Frequenzumrichter, wandelt die pulsweitenmodulierte Spannung in einen Nennstrom zum Betrieb der elektrischen Maschine 15 für den Antrieb der Motorpumpeneinheit 20 um. Der Nennstrom ist hierbei die von dem elektrischen Antrieb 15 in Betrieb der Motorpumpeneinheit 20 und Ziehkissenpresse aufgenommene elektrische Stromstärke, basierend auf dem der Motorsteuereinrichtung 14 bereitgestellten Steuersignal. Der elektrische Antrieb 15 ist beispielsweise ein Dreiphasen Drehstrommotor. Die Motorpumpeneinheit 20 stellt die hydraulische Energie zum Betrieb der Ziehkissenpresse bereit.

Ein Stromdetektor 17 ist mit dem Ausgang der Motorsteuereinrichtung 14 verbunden. Der Stromdetektor 17 ermittelt in den drei Phasen des elektrischen Antriebs 15 die elektrische Stromstärke und stellt die ermittelte elektrische Stromstärke über eine Rückkopplung an den Stromregler 13 zur Berechnung eines Steuersignals bereit. Über den Stromdetektor 17 wird der Wert der elektrischen Stromstärke an den drei Phasen des elektrischen Antriebs 15 ermittelt. Hierfür können an dem elektrischen Antrieb 15 vorhandene Stromdetektoren 17 verwendet werden, um den Ist-Strom I_{S} zu ermitteln und zur weiteren Verarbeitung an den Stromregler 13 zurückzuführen. Dies vereinfacht die eigentliche Drehzahl des elektrischen Antriebs 15 abzuleiten und somit die Regelung bzw. das zu regelnde System dynamischer auszugestalten. Zudem wird die Regelbandbreite im System erhöht.

In einer alternativen Ausführungsform kann das Steuersignal für den elektrischen Antrieb durch eine Steuerung über einen gesteuerten Strom am Stromregler 13 bereitgestellt werden.

Ein Drehzahlgeber 18 ist mit dem elektrischen Antrieb 15 der Motorpumpeneinheit 20 verbunden. Der Drehzahlgeber 18 ermittelt die Momentandrehzahl n_{I} des elektrischen Antriebs 15 und stellt die ermittelte Momentandrehzahl n_{I} über eine Rückkopplung dem Drehzahlregler 12 zur Berechnung eines Soll-Stroms I_{S} bereit. Zum Ermitteln der Drehzahl des elektrischen Antriebs 15 können konventionelle, beispielsweise bereits am elektrischen Antrieb 15 vorgesehene Drehzahlgeber 12 verwendet werden. Eine zusätzliche Regelung der Drehzahl kann in vorteilhafter Weise die Dynamik der Stromregelung in der inneren Schleife der Gesamtregelung des elektrischen Antriebs 15 steigern.

In einer alternativen Ausführungsform kann der elektrische Antrieb 15 über ein gesteuertes Drehfeld mittels der durch die bereits am elektrischen Antrieb 15 vorgesehenen Drehzahlgeber gesteuert werden.

Zur Berechnung der Stellgröße für den Drehregler 12 wird die Störgröße 30 berücksichtigt. Als Störgröße 30 wird die Geschwindigkeit aufgeschaltet. Insbesondere kann während des Ziehvorgangs (die Geschwindigkeit des Ziehkissen als Störgröße für die Kraftregelung geschaltet werden. Diese Geschwindigkeit wird am Ziehkissen gemessen oder wird durch die Geschwindigkeit des Stößels in dieser Phase vorgegeben und ist somit bekannt. Ist das Ausgangssignal der Kraftregelung eine Drehzahl, kann die bekannte Größe Ziehkissengeschwindigkeit als Störgröße in vorteilhafter Weise dem Regelkreis aufgeschaltet werden und sorgt damit für eine weitere Verbesserung der Kraftregelung.

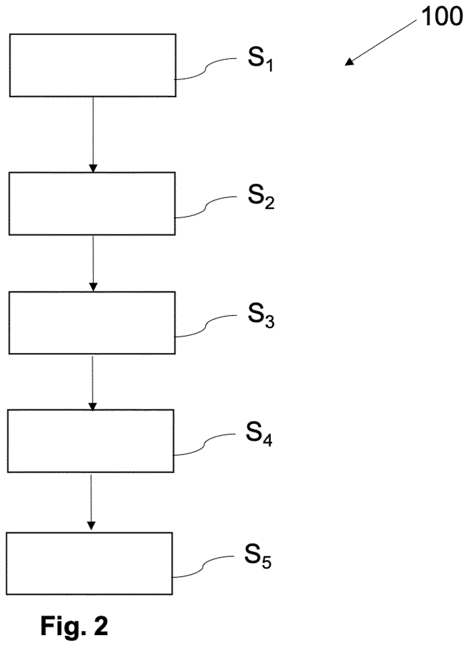

Fig. 2 zeigt ein schematisches Ablaufdiagramm zur Darstellung eines möglichen Ausführungsbeispiels eines erfindungsgemäßen Verfahrens zur Steuerung oder Regelung einer Bewegung eines Ziehkissens einer Ziehkissenpresse.

Das Verfahren umfasst bei dem dargestellten Ausführungsbeispiel mehrere Schritte. In einem ersten Schritt S1 erfolgt ein Empfangen eines Ziehkissenstellwertbefehls und einer Ziehkisseninformation durch den Stellwertgeber 11. Die Ziehkisseninformation umfasst beispielsweise die Soll-Kraft F_{S}.

In einem weiteren Schritt S2 wird eine Soll-Drehzahl n_{S} durch den Stellwertgeber 11 basierend auf dem empfangenen Ziehkissenstellwertbefehl und der Ziehkisseninformation berechnet. Die Berechnung der Soll-Drehzahl n_{S} erfolgt aus der Differenz der Soll-Kraft F_{S} und der Ist-Kraft I_{S}. Die Ist-Kraft I_{S} ist die Differenz aus den Produkten des aktuellen Drucks in den Kammern des Hydraulikzylinders und der Fläche der Hydraulikzylinder. Der Druck in den Kammern kann über die Ziehstempeldetektoren 16, 19, beispielsweise Drucksensoren, bestimmt werden.

In einer Ausführungsform umfasst die Soll-Drehzahl n_{S} eine Differenz aus der von der Antriebsmaschine 15 rückgekoppelten Momentan-Drehzahl n_{I} und einer aufgeschalteten Störgröße, beispielsweise der Geschwindigkeit des Ziehkissens. Die Momentan-Drehzahl n_{I} der elektrischen Antriebsmaschine 15 wird durch einen Drehzahlgeber 18 bestimmt.

In einem weiteren Schritt S3 wird ein Soll-Strom I_{S} durch den Drehzahlregler 12 basierend auf der berechneten Soll-Drehzahl n_{S} berechnet. In einer möglichen Ausführungsform umfasst der Soll-

Strom I_{S} die Differenz aus dem durch den Stellwertgeber 12 bereitgestellten Soll-Strom I_{S} und dem von der Motorsteuereinrichtung 14 an den elektrischen Antrieb 15 bereitgestellten Ist-Strom I_{I}. Der Ist-Strom I_{I} wird durch eine Rückkopplung bereitgestellt. Die elektrische Stromstärke des Ist-Stromes I_{I} wird, beispielsweise durch einen Stromdetektor ermittelt.

In einem weiteren Schritt S4 wird ein Steuersignal durch den Stromregler 13 basierend auf dem durch den Drehzahlregler 12 bereitgestellten Soll-Strom I_{S} berechnet. Das Steuersignal kann beispielsweise eine pulsweitenmodulierte Spannung umfassen. Die Motorsteuereinrichtung 14, beispielsweise ein Frequenzumrichter, wandelt die pulsweitenmodulierte Spannung in einem weiteren Schritt S5 in einen Nennstrom zum Betrieb der elektrischen Maschine 15 für den Antrieb der fluidhydraulischen Motorpumpeneinheit 20 zum Bewegen eines Ziehkissens einer Ziehkissenpresse um.

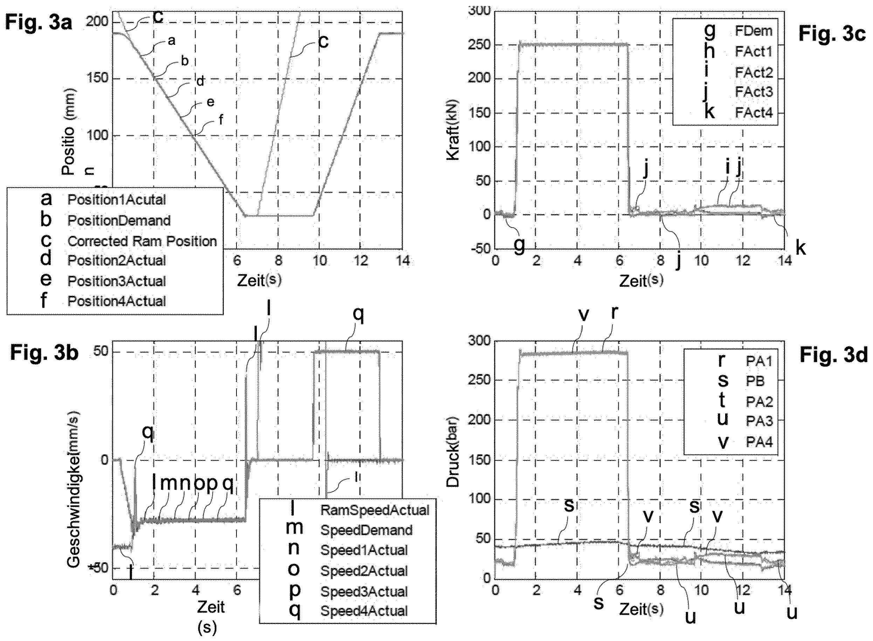

Fig. 3a bis 3d zeigen ein Diagramm zur Erläuterung der Kraftreglung bei einem Tiefziehgang inklusive Störgrößenaufschaltung bei einer möglichen Ausführungsform einer erfindungsgemäßen Vorrichtung zur Steuerung oder Regelung einer Bewegung eines Ziehkissens einer Ziehkissenpresse.

In den Fig. 3a bis 3d ist ein Tiefziehvorgang dargestellt, wobei die Vorbeschleunigung des Ziehkissens aktiviert wurde. Die Messung wurde mit einem Simulationswerkzeug durchgeführt um etwaige Schäden, welche durch Fehler bei der Inbetriebnahme entstehen, vorzubeugen. Der in Fig. 3a bis 3d dargestellt Test zeigt eine stabile Kraftregelung für den ganzen Tiefziehhub. Der Kraftaufbau erfolgt ohne nennenswerten Überschwinger.

In Fig. 3a ist die Stößel und die Zylinderpositionen 1 bis 4 des Ziehkissen dargestellt. Die Kurven liegen hintereinander und die Zylinder bewegen sich parallel. Das Ziehkissen wird im Zeitbereich von 0s bis 1s aktiv vorbeschleunigt. Zum Zeitpunkt 1s trifft der Stößel auf das Ziehkissen und verdrängt dieses. Im Zeitbereich von 1s bis 7s findet der Umformvorgang statt. Bei dem Zeitpunkt 7s bewegt sich der Stößel nach oben, während das Ziehkissen in der Pressposition verbleibt. Das umgeformte Teil kann entnommen werden (vgl. Zeitbereich 7s bis 10s). Im Zeitbereich von 10s bis 13s fahren die Ziehkissenzylinder auf die Ausgangsposition zurück. Das neue Umformteil kann eingelegt werden.

In Fig. 3b ist die Geschwindigkeit der Ziehkissenzylinders 1-4 und die Geschwindigkeit des Stößels dargestellt. Im Zeitbereich von 0s bis 1s werden die Ziehzylinder vorbeschleunigt. Weiterhin herrscht eine Relativgeschwindigkeit zwischen Stößel und Ziehkissenzylinder. Zum Zeitpunkt 1s kommt es zum Kontakt von Stößel und Ziehkissen. Ab dem Zeitbereich von 1s bis 7s wird das Ziehkissen vom Stößel verdrängt, daher sind die Geschwindigkeit von Stößel und Ziehkissen identisch.

Fig. 3c zeigt die aus den Kammerdrücken errechnete Kraft an den Ziehzylindern. Diese Kraft stellt die Regelgröße während des Ziehprozesses im Zeitbereich von 1s bis 7s dar. Fig. 3c zeigt die Regelgüte der Kraftregelung bei konstantem Sollwert von 250kN je Zylinder. Dabei folgt die Ist-Kraft nahezu ideal dem Sollprofil obwohl sich der Ziehkissenzylinder bewegt (vgl. Fig. 3b). Diese Kraftregelgüte ist nur erreichbar aufgrund der Kraftreglung mittels Drehzahlvorgabe gemäß der vorliegenden Erfindung, da nur so die Aufschaltung der Regelstörgröße (Geschwindigkeit des Zylinders) realisiert werden kann. Darüber hinaus werden anfallende hydraulisch mechanische Verluste, beispielsweise Reibung durch die Drehzahlvorgabe des Kraftreglers ausgeregelt.

Fig. 3d zeigt die Drücke auf der A Seite und B Seite der Ziehkissenzylinders. Aus den jeweiligen Drücken kann über die Fläche des Ziehzylinders die jeweilige Abtriebskraft der Ziehzylinder errechnet werden (vgl. Fig. 3c).

Zusammenfassend betrifft die Erfindung eine Vorrichtung und ein Verfahren zur Steuerung oder Regelung einer Bewegung eines Ziehkissens einer Ziehkissenpresse. Die Vorrichtung weist einen Stellwertgeber (11), einen Drehzahlregler (12), einen Stromregler (13) und eine Motorsteuereinrichtung (14) zum Bereitstellen eines Nennstroms für einen elektrischen Antrieb (15) einer fluidhydraulischen Motorpumpeneinheit (20) zum Bewegen eines Ziehkissens einer Ziehkissenpresse auf. Der Stellwertgeber (11) ist zur Berechnung einer Soll-Drehzahl basierend auf einem Ziehkissenstellwertbefehl und einer Ziehkisseninformation vorgesehen. Der Drehzahlregler (12) berechnet einen Soll-Strom basierend auf der Soll-Drehzahl. Der Stromregler (13) berechnet ein Steuersignal basierend auf dem Soll-Strom und die Motorsteuereinrichtung (14) berechnet den Nennstrom basierend auf dem Steuerstrom.

Diesbezüglich kann die Dynamik der Ansteuerung der elektrischen Maschine verbessert werden.

### Bezugszeichenliste

- 10: Vorrichtung
- 11: Stellwertgeber
- 12: Drehzahlregler
- 13: Stromregler
- 14: Motorsteuereinrichtung
- 15: elektrischer Antrieb
- 16: Ziehstempeldetektor
- 17: Stromdetektor
- 18: Drehzahlgeber
- 19: Ziehstempeldetektor
- 20: Motorpumpeneinheit
- 30: Störgröße
- 100: Verfahren
- S1-S4: Verfahrensschritte

## Patentansprüche

1. Vorrichtung (10) zur Steuerung oder Regelung einer Bewegung eines Ziehkissens einer Ziehkissenpresse aufweisend:
einen Stellwertgeber (11),
einen Drehzahlregler (12),
einen Stromregler (13) und
eine Motorsteuereinrichtung (14)
zum Bereitstellen eines Nennstroms für einen elektrischen Antrieb (15) einer fluidhydraulischen Motorpumpeneinheit (20) zum Bewegen eines Ziehkissens einer Ziehkissenpresse, wobei
der Stellwertgeber (11) zur Berechnung einer Soll-Drehzahl basierend auf einem Ziehkissenstellwertbefehl und einer Ziehkisseninformation, vorgesehen ist,
der Drehzahlregler (12) zur Berechnung eines Soll-Stroms basierend auf der Soll-Drehzahl vorgesehen ist, und wobei der Drehzahlregler (12) eine Soll-Drehzahl verwendet, die eine Störgröße (30) umfasst, und wobei als Störgröße die Geschwindigkeit des Ziehkissens der Ziehkissenpresse aufgeschaltet ist,
der Stromregler (13) zur Berechnung eines Steuersignals basierend auf dem Soll-Strom vorgesehen ist, und
die Motorsteuereinrichtung (14) zur Berechnung des Nennstroms basierend auf dem Steuerstrom vorgesehen ist.

2. Vorrichtung (10) nach Anspruch 1, wobei die Berechnung der Soll-Drehzahl basierend auf einer Ziehstempelinformation, die von einem Ziehstempeldetektor (16,19) erfasst wird, vorgesehen ist.

3. Vorrichtung (10) nach einem der vorhergehenden Ansprüche 1 und 2, wobei der Stellwertgeber (11) einen Positionsregler, einen Geschwindigkeitsregler oder einen Kraftregler umfasst.

4. Vorrichtung (10) nach einem der vorhergehenden Ansprüche 1 bis 3, die einen Stromdetektor (17) zum Erfassen des Nennstromes des elektrischen Antriebs (15) umfasst, wobei der Stromregler (13) einen Soll-Strom verwendet, der eine Differenz aus dem Soll-Strom und der durch den Stromdetektor (17) erfassten Rückkopplung des Nennstroms des elektrischen Antriebs (15) ist.

5. Vorrichtung (10) nach einem der vorhergehenden Ansprüche 1 bis 4, die einen Drehzahlgeberzum Erfassen einer Momentandrehzahl des elektrischen Antriebs (15) umfasst, wobei der Drehzahlregler (12) eine Soll-Drehzahl verwendet, die eine Differenz aus der Soll-Drehzahl und der durch den Drehzahlgeber (18) erfassten Rückkopplung der Momentandrehzahl des elektrischen Antriebs (15) ist.

6. Vorrichtung (10) nach einem der vorhergehenden Ansprüche 1 bis 5, wobei die Soll-Drehzahl des Stellwertgebers (11) proportional zum Kraft- oder Druckanstieg innerhalb der Ziehkissenpresse ist.

7. Verfahren (100) zur Steuerung oder Regelung einer Bewegung eines Ziehkissens einer Ziehkissenpresse mit den Schritten:
Empfangen (S1) eines Ziehkissenstellwertbefehls und einer Ziehkisseninformation durch den Stellwertgeber (11);
Berechnen (S2) einer Soll-Drehzahl durch den Stellwertgeber (11) basierend auf dem empfangenen Ziehkissenstellwertbefehl und der Ziehkisseninformation, und wobei der Drehzahlregler (12) eine Soll-Drehzahl verwendet, die eine Störgröße (30) umfasst, und wobei als Störgröße die Geschwindigkeit des Ziehkissens der Ziehkissenpresse aufgeschaltet ist;
Berechnen (S3) eines Soll-Stroms durch den Drehzahlregler (12) basierend auf der berechneten Soll-Drehzahl;
Berechnen (S4) eines Steuersignals durch den Stromregler (13) basierend auf dem berechneten Soll-Strom; und
Berechnen (S5) eines Nennstroms durch eine Motorsteuereinrichtung (14) basierend auf dem berechneten Steuersignal,
zum Bereitstellen eines Nennstroms für einen elektrischen Antrieb (15) einer fluidhydraulischen Motorpumpeneinheit (20) zum Bewegen eines Ziehkissens einer Ziehkissenpresse.

8. Verfahren (100) nach Anspruch 7, wobei die Soll-Drehzahl auf Basis einer Ziehstempelinformation, die von einem Ziehstempeldetektor (16,19) erfasst wird, berechnet wird.

9. Verfahren (100) nach einem der vorhergehenden Ansprüche 7 und 8, wobei der Stromregler einen Soll-Strom verwendet, der eine Differenz aus dem Soll-Strom und der durch einen Stromdetektor (17) erfassten Rückkopplung des Nennstroms des elektrischen Antriebs (15) ist.

10. Verfahren (100) nach einem der vorhergehenden Ansprüche 7 bis 9, wobei der Drehzahlregler (12) eine Soll-Drehzahl verwendet, die eine Differenz aus der Soll-Drehzahl und der durch einen Drehzahlgeber (18) erfassten Rückkopplung der Momentandrehzahl des elektrischen Antriebs (15) ist.

11. Ziehkissenpresse enthaltend eine Vorrichtung (10) gemäß der Ansprüche 1 bis 6.

## Claims

1. Device (10) for open-loop or closed-loop control of a movement of a die cushion of a die cushion press, comprising:
a control value encoder (11),
a speed controller (12),
a current controller (13), and
a motor control device (14)
for providing a nominal current for an electrical drive (15) of a fluid-hydraulic motor pump unit (20) for moving a die cushion of a die cushion press, wherein
the control value encoder (11) is provided in order to calculate a setpoint speed based on a die cushion control value command and die cushion information,
the speed controller (12) is provided in order to calculate a setpoint current based on the setpoint speed, and wherein the speed controller (12) uses a setpoint speed which comprises a disturbance variable (30), and wherein the speed of the die cushion of the die cushion press is incorporated as a disturbance variable,
the current controller (13) is provided in order to calculate a control signal based on the setpoint current, and
the motor control device (14) is provided in order to calculate the nominal current based on the control current.

2. Device (10) according to claim 1, wherein the calculation of the setpoint speed is provided based on drawing punch information detected by a drawing punch detector (16, 19).

3. Device (10) according to either of the preceding claims 1 and 2, wherein the control value encoder (11) comprises a position controller, a velocity controller, or a force controller.

4. Device (10) according to any of the preceding claims 1 to 3, which comprises a current detector (17) for detecting the nominal current of the electrical drive (15), wherein the current controller (13) uses a setpoint current which is a difference between the setpoint current and the feedback of the nominal current of the electrical drive (15), which feedback is detected by the current detector (17).

5. Device (10) according to any of the preceding claims 1 to 4, which comprises a speed sensor for detecting an instantaneous speed of the electrical drive (15), wherein the speed controller (12) uses a setpoint speed which is a difference between the setpoint speed and the feedback of the instantaneous speed of the electrical drive (15), which feedback is detected by the speed sensor (18).

6. Device (10) according to any of the preceding claims 1 to 5, wherein the setpoint speed of the control value encoder (11) is proportional to the increase in force or pressure within the die cushion press.

7. Method (100) for open-loop or closed-loop control of a movement of a die cushion of a die cushion press, comprising the steps of:
receiving (S1) a die cushion control value command and die cushion information via the control value encoder (11);
calculating (S2), by means of the control value encoder (11), a setpoint speed based on the received die cushion control value command and the die cushion information, and wherein the speed controller (12) uses a setpoint speed which comprises a disturbance variable (30),
wherein the speed of the die cushion of the die cushion press is incorporated as a disturbance value;
calculating (S3) a setpoint current by means of the speed controller (12), based on the calculated setpoint speed;
calculating (S4) a control signal by means of the current controller (13), based on the calculated setpoint current; and
calculating (S5) a nominal current by means of a motor control device (14), based on the calculated control signal,
in order to provide a nominal current for an electrical drive (15) of a fluid-hydraulic motor pump unit (20) for moving a die cushion of a die cushion press.

8. Method (100) according to claim 7, wherein the setpoint speed is calculated based on drawing punch information detected by a drawing punch detector (16, 19).

9. Method (100) according to either of the preceding claims 7 and 8, wherein the current controller uses a setpoint current which is a difference between the setpoint current and the feedback of the nominal current of the electrical drive (15), which feedback is detected by a current detector (17).

10. Method (100) according to any of the preceding claims 7 to 9, wherein the speed controller (12) uses a setpoint speed which is a difference between the setpoint speed and the feedback of the instantaneous speed of the electrical drive (15), which feedback is detected by a speed sensor (18).

11. Die cushion press containing a device (10) according to claims 1 to 6.

## Revendications

1. Dispositif (10) pour la commande ou la régulation d'un déplacement d'un coussin de serre-flan d'une presse à coussin de serre-flan, présentant :
un transmetteur de valeur de réglage (11),
un régulateur de vitesse de rotation (12),
un régulateur de courant (13) et
un appareil de commande de moteur (14)
pour la fourniture d'un courant nominal à un entraînement électrique (15) d'une unité formant motopompe (20) à fluide hydraulique pour le déplacement d'un coussin de serre-flan d'une presse à coussin de serre-flan, dans lequel
le transmetteur de valeur de réglage (11) est prévu pour le calcul d'une vitesse de rotation de consigne sur la base d'une instruction de valeur de réglage de coussin de serre-flan et d'une information de coussin de serre-flan,
le régulateur de vitesse de rotation (12) est prévu pour le calcul d'un courant de consigne sur la base de la vitesse de rotation de consigne, et dans lequel le régulateur de vitesse de rotation (12) utilise une vitesse de rotation de consigne qui comprend une grandeur perturbatrice (30), et dans lequel la vitesse du coussin de serre-flan de la presse à coussin de serre-flan est appliquée en tant que grandeur perturbatrice,
le régulateur de courant (13) est prévu pour le calcul d'un signal de commande sur la base du courant de consigne, et
l'appareil de commande de moteur (14) est prévu pour le calcul du courant nominal sur la base du courant de commande.

2. Dispositif (10) selon la revendication 1, dans lequel le calcul de la vitesse de rotation de consigne est prévu sur la base d'une information de poinçon d'emboutissage qui est détectée par un détecteur de poinçon d'emboutissage (16, 19).

3. Dispositif (10) selon l'une des revendications précédentes 1 et 2, dans lequel le transmetteur de valeur de réglage (11) comprend un régulateur de position, un régulateur de vitesse ou un régulateur de force.

4. Dispositif (10) selon l'une des revendications précédentes 1 à 3, comprenant un détecteur de courant (17) pour la détection du courant nominal de l'entraînement électrique (15), dans lequel le régulateur de courant (13) utilise un courant de consigne qui est une différence entre le courant de consigne et la rétroaction du courant nominal de l'entraînement électrique (15) détectée par le détecteur de courant (17).

5. Dispositif (10) selon l'une des revendications précédentes 1 à 4, comprenant un transmetteur de vitesse de rotation pour la détection d'une vitesse de rotation instantanée de l'entraînement électrique (15), dans lequel le régulateur de vitesse de rotation (12) utilise une vitesse de rotation de consigne qui est une différence entre la vitesse de rotation de consigne et la rétroaction de la vitesse de rotation instantanée de l'entraînement électrique (15) détectée par le transmetteur de vitesse de rotation (18).

6. Dispositif (10) selon l'une des revendications précédentes 1 à 5, dans lequel la vitesse de rotation de consigne du transmetteur de valeur de réglage (11) est proportionnelle à l'augmentation de force ou de pression à l'intérieur de la presse à coussin de serre-flan.

7. Procédé (100) pour la commande ou la régulation d'un déplacement d'un coussin de serre-flan d'une presse à coussin de serre-flan, comportant les étapes consistant à :
réceptionner (S1) une instruction de valeur de réglage de coussin de serre-flan et une information de coussin de serre-flan par le transmetteur de valeur de réglage (11) ;
calculer (S2) une vitesse de rotation de consigne par le transmetteur de valeur de réglage (11) sur la base de l'instruction de valeur de réglage de coussin de serre-flan et de l'information de coussin de serre-flan réceptionnées, et dans lequel le régulateur de vitesse de rotation (12) utilise une vitesse de rotation de consigne qui comprend une grandeur perturbatrice (30), et
dans lequel la vitesse du coussin de serre-flan de la presse à coussin de serre-flan est appliquée en tant que grandeur perturbatrice ;
calculer (S3) un courant de consigne par le régulateur de vitesse de rotation (12) sur la base de la vitesse de rotation de consigne calculée ;
calculer (S4) un signal de commande par le régulateur de courant (13) sur la base du courant de consigne calculé ; et
calculer (S5) un courant nominal par un appareil de commande de moteur (14) sur la base du signal de commande calculé,
pour la fourniture d'un courant nominal à un entraînement électrique (15) d'une unité formant motopompe (20) à fluide hydraulique pour le déplacement d'un coussin de serre-flan d'une presse à coussin de serre-flan.

8. Procédé (100) selon la revendication 7, dans lequel la vitesse de rotation de consigne est calculée sur la base d'une information de poinçon d'emboutissage qui est détectée par un détecteur de poinçon d'emboutissage (16, 19).

9. Procédé (100) selon l'une des revendications précédentes 7 et 8, dans lequel le régulateur de courant utilise un courant de consigne qui est une différence entre le courant de consigne et la rétroaction du courant nominal de l'entraînement électrique (15) détectée par un détecteur de courant (17).

10. Procédé (100) selon l'une des revendications précédentes 7 à 9, dans lequel le régulateur de vitesse de rotation (12) utilise une vitesse de rotation de consigne qui est une différence entre la vitesse de rotation de consigne et la rétroaction de la vitesse de rotation instantanée de l'entraînement électrique (15) détectée par un transmetteur de vitesse de rotation (18).

11. Presse à coussin de serre-flan contenant un dispositif (10) selon les revendications 1 à 6.
